# EUROPÄISCHE PATENTANMELDUNG

(11) **EP 0 884 436 A2**
(43) Veröffentlichungstag der Anmeldung: **16.12.1998**
(21) Anmeldenummer: 98110624.8
(22) Anmeldetag: 10.06.1998
(51) Int. Cl.: E05B 47/00, E05B 65/36, H02K 7/06

(54) **Elektromotorischer Stellantrieb für Kraftfahrzeuge**

(30) Priorität: 12.06.1997 DE 19724877
(71) Anmelder: Hella KG Hueck & Co., 59552 Lippstadt (DE)
(72) Erfinder: Stümpel, Josef, 33178 Borchen (DE)

(57) **Zusammenfassung**

Bei einem elektromotorischen Stellantrieb für Kraftfahrzeuge, insbesondere für Zentralverriegelungen, mit einem Gehäuse (2), mit einem Stellglied (3) und mit mindestens einer Befestigungsschraube (4), die in eine Öffnung (5) eines Karosserieteiles (6) hineinragt und eine Durchgangsöffnung (7) des Gehäuses (2) durchdringt, ist in der Durchgangsöffnung (7) zur Erhöhung des Geräuschkomforts für die Benutzer des Kraftfahrzeuges ein Geräuschdämpfer (8) angeordnet, der durch elastische Mittel mit dem Gehäuse (2) verbunden ist.

## Beschreibung

Die Erfindung betrifft einen elektromotorischen Stellantrieb nach dem Oberbegriff des Anspruchs 1.

Ein derartiger elektromotorischer Stellantrieb ist aus der DE 195 35 437 A1 vorbekannt. Dieser vorbekannte Stellantrieb ist ein Stellelement einer elektromotorischen Zentralverriegelung für Kraftahrzeuge. Dieses Stellelement weist ein Gehäuse und ein gegenüber dem Gehäuse längsverschiebliches Stellglied auf. Der Stellantrieb wird mittels zweier Befestigungsschrauben an einem Karosserieteil dadurch befestigt, daß die Befestigungsschraube in eine Öffnung des Karosserieteils hineinragt und eine Durchgangsöffnung des Gehäuses durchdringt.

Diese vorbekannten Stellantriebe weisen häufig hohe Bewegungsgeschwindigkeiten des Stellgliedes gegenüber dem Gehäuse auf. Dies führt insbesondere bei Erreichen der Endlagen des Stellgliedes im Gehäuse zur Geräuschbildung, die aufgrund der starren Befestigung des Gehäuses am Karosserieteil auf das Karosserieteil übertragen wird. Diese Geräuschentwicklung kann den Benutzer des Kraftfahrzeuges stören und zu Komforteinbußen bei der Benutzung des Kraftfahrzeuges führen.

Die Erfindung hat die Aufgabe, einen elektromotorischen Stellantrieb für Kraftfahrzeuge zu schaffen, der bei ordnungsgemäßer Funktion einen höheren Geräuschkomfort für die Benutzer des Kraftfahrzeuges bietet.

Diese Aufgabe wird erfindungsgemäß durch die Kennzeichenmerkmale des Anspruchs 1 gelöst.

Dadurch, daß in der Durchgangsöffnung des Gehäuses ein Geräuschdämpfer angeordnet ist, der durch elastische Mittel mit dem Gehäuse verbunden ist, wird eine unmittelbare ungedämpfte Übertragung, insbesondere des von dem elektromotorischen Stellantrieb erzeugten Körperschalls, auf das Karosserieteil vermieden. Dies führt sowohl bei der ungestörten Bewegung des Stellgliedes gegenüber dem Gehäuse als auch bei dem Anschlagen des Stellgliedes am Gehäuse in den Endlagen zu einer deutlichen Verringerung der Geräuschentwicklung des elektromotorischen Stellantriebes. Insbesondere wird eine Verstärkung dieser Geräuschentwicklung durch die Vermeidung der starren Ankopplung und Befestigung des Stellantriebes am Karosserieteil durch das Karosserieteil vermieden.

Dabei erfordern die erfindungsgemäßen Maßnahmen gegenüber dem Vorbekannten nur einen geringfügigen Mehraufwand für den Geräuschdämpfer mit den elastischen Mitteln, der vom Benutzer des Kraftfahrzeuges aufgrund des gegenüber dem Vorbekannten deutlich erhöhten Geräuschkomforts gern in Kauf genommen wird.

Vorteilhafte Ausgestaltungen und Weiterbildungen der Erfindung gehen aus den Unteransprüchen hervor.

So ist es besonders vorteilhaft, wenn die Durchgangsöffnung des Gehäuses eine Hohlkammer aufweist, an deren Stirn- und Seitenwänden sich die elastischen Mittel abstützen können, ohne daß der übrige Geräuschdämpfer in Berührung mit dem Gehäuse des Stellantriebes gelangt. Mit diesen Maßnahmen wird besonders wirkungsvoll die unerwünschte Übertragung von Körperschall vom Stellantrieb auf das Karosserieteil vermieden.

Der Geräuschdämpfer kann besonders einfach und kostengünstig eine Hülse sein, die als elastische Mittel an ihrem Außenumfang insbesondere handelsübliche O-Ringe aus Gummimaterial oder gummielastischem Material aufweist. In diesem Zusammenhang kann die Hülse mindestens einen umlaufenden Bund aufweisen, an dem sich die O-Ringe abstützen. Durch die Abstützung der O-Ringe sowohl an dem Gehäuse des Stellantriebes als auch an der Hülse ist die Hülse im Gehäuse des Stellantriebes dauerelastisch gelagert und befestigt. Um die Befestigung der Befestigungsschraube an der Hülse zu gewährleisten, kann in diesem Zusammenhang besonders vorteilhaft die Hülse in ihrem mindestens einen Endbereich ein Innengewinde aufweisen, das mit einem entsprechenden Außengewindeabschnitt der Befestigungsschraube zusammenwirkt.

Die Hülse kann in mindestens einem ihrer Endbereiche eine Aufweitung aufweisen, um das Einführen der Befestigungsschraube in das Innere der Hülse bei der Montage des elektromotorischen Stellantriebes am Karosserieteil zu vereinfachen. Die Hülse kann einerseits einfach und kostengünstig als Tiefziehteil ausgebildet sein. Es ist auch möglich, die Hülse als Drehteil auszubilden.

Die Befestigungsschraube kann zum Zweck der Befestigung des elektromotorischen Stellantriebes an dem Karosserieteil besonders vorteilhaft auf der dem Karosserieteil zugewandten Seite einen Schraubenkopf aufweisen, der beispielsweise in einer schlüssellochartig herausgebildeten Öffnung des Karosserieteiles angeordnet ist. Es ist auch besonders vorteilhaft, wenn die Befestigungsschraube auf der vom Karosserieteil abgewandten Seite einen Außenvielkant aufweist, der mit einem Innenvielkant einer Betätigungshandhabe zusammenwirken kann, um auch auf der vom Karosserieteil abgewandten Seite des Stellantriebes die Drehung der Befestigungsschraube, und damit die Verbindung des Stellantriebes mit dem Karosserieteil, zu ermöglichen.

Ein Ausführungsbeispiel des erfindungsgemäßen elektromotorischen Stellantriebes ist in den Zeichnungen dargestellt und wird im folgenden anhand der Zeichnungen näher erläutert.

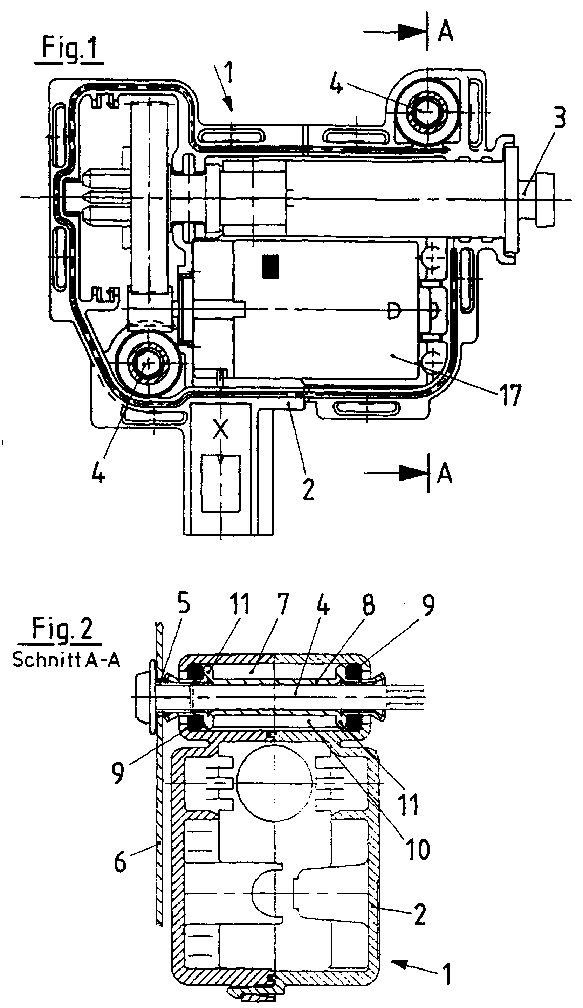

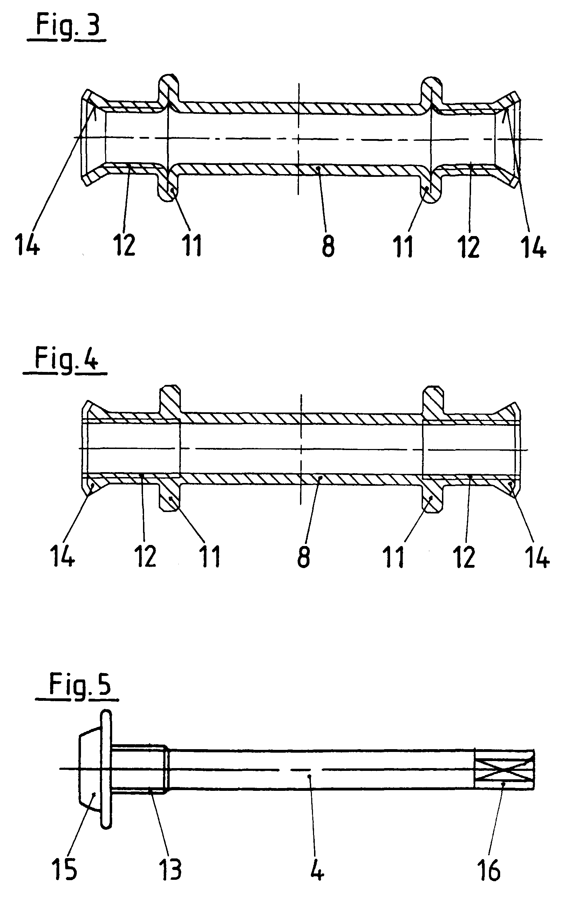

Es zeigen Figur 1 einen erfindungsgemäßen elektromotorischen Stellantrieb im geöffneten Zustand, Figur 2 einen Schnitt durch den Stellantrieb gemäß Figur 1 gemäß der dortigen Schnittebene A-A, Figur 3 einen als Hülse ausgebildeten Geräuschdämpfer als Tiefziehteil, Figur 4 einen als Hülse ausgebildeten Geräuschdämpfer als Drehteil und Figur 5 eine Befestigungsschraube zur Verwendung mit den Hülsen gemäß Figur 3 und Figur 4.

In der Figur 1 weist der elektromotorische Stellantrieb (1) ein Kunststoffgehäuse (2) auf, dessen eines von beiden Gehäuseteilen in der Figur 1 dargestellt ist. In dem Gehäuse (2) ist eine längsverschiebliche Schubstange (3) als Stellglied gelagert, die durch einen Elektromotor (17) und ein zwischengeschaltetes Getriebe angetrieben wird. Der elektromotorische Stellantrieb (1) ist mittels Befestigungsschrauben (4) an einem in der Figur 1 nicht dargestellten Karosserieteil befestigt.

In der Figur 2 sind gleiche oder gleichwirkende Einrichtungsteile Wie in der Figur 1 mit denselben Bezugszeichen versehen. Wie vorher bereits erläutert, ist das Gehäuse (2) des elektromotorischen Stellantriebes (1) mittels Befestigungsschrauben (4) mit einem Karosserieteil (6) verbunden, das im vorliegenden Ausführungsbeispiel ein Türinnenblech ist. Zur Verbindung des elektromotorischen Stellantriebes (1) mit dem Karosserieteil (6) weist das Karosserieteil (6) eine Öffnung (5) auf, durch die die Befestigungsschraube (4) hindurchgesteckt ist. Andererseits durchdringt die Befestigungsschraube (4) eine Durchgangsöffnung (7) des Gehäuses (2), die zu einer Hohlkammer (10) erweitert ist, in der als Geräuschdämpfer (8) eine Metallhülse angeordnet ist. Zwischen der Metallhülse (8) und dem Gehäuse (2) sind als elastische Mittel (9) Gummi-O-Ringe angeordnet, die sich einerseits an umlaufenden Bunden (11) der Metallhülse (8) und andererseits an den Stirn- und Seitenwänden der Hohlkammer (10) abstützen, so daß die Verbindung und Lagerung und Befestigung der Metallhülse (8) im Gehäuse (2) allein über die Gummi-O-Ringe (9) erfolgt. Damit wird eine unerwünschte Übertragung des Körperschalls des elektromotorischen Stellantriebes (1) von dessen Gehäuse (2) auf das Karosserieteil (6) zuverlässig vermieden.

In der Figur 3 weist die Metallhülse (8) als Geräuschdämpfer neben den umlaufenden Bunden (11) in beiden Endbereichen Innengewinde (12) auf. Diese Innengewinde (12) korrespondieren mit einem Außengewindeabschnitt (13) der Befestigungsschraube (4) gemäß Figur 5. Diese Gewindeanordnung dient zur Befestigung der Befestigungsschrauben (4) an der Metallhülse (8) und damit zur Befestigung des Gehäuses (2) des elektromotorischen Stellantriebes (1) an dem Türinnenblech (6) des Kraftfahrzeuges. Aufgrund der Anordnung der Innengewinde (12) an beiden Endbereichen der Metallhülse (8) ist die Metallhülse (8) symmetrisch aufgebaut, so daß bei der Montage keine Vorzugsrichtung zu beachten ist.

Weiterhin weist die Metallhülse (8) eine Aufweitung (14) in beiden Endbereichen auf, die einer erleichterten Einführung der Befestigungsschraube (4) in die Metallhülse (8) dienen soll. Die Metallhülse gemäß Figur 3 ist als Tiefziehteil ausgebildet, wobei die umlaufenden Bunde (11) durch Stauchen und die Aufweitungen (14) durch Pressen erzeugt sind.

In Figur 4 sind gleiche oder gleichwirkende Einrichtungsteile wie in der Figur 3 mit denselben Bezugszeichen versehen. Die Metallhülse (8) in Figur 4 ist demgegenüber als Drehte ausgebildet. Dies stellt eine Alternative zu der Lösung gemäß Figur 3 dar.

In Figur 5 wird ersichtlich, daß die Befestigungsschrauben (4) neben dem Außengewindeabschnitt (13) zur Befestigung der Metallhülse (8) auf der dem Karosserieteil (6) zugewandten Seite einen Schraubenkopf (15) mit einem nicht dargestellten Kreuzschlitz zur Drehbetätigung der Befestigungsschrauben (4) aufweisen. Darüber hinaus weisen die Befestigungsschrauben (4) auf der vom Karosserieteil (6) abgewandten Seite einen Außenvielkant (16) auf, der im vorliegenden Ausführungsbeispiel als Außensechskant ausgebildet ist und der, ebenfalls durch eine Drehhandhabe betätigt, zur Verbindung des Gehäuses mit dem Karosserieteil (6) dient.

Dadurch daß die Verbindung des elektromotorischen Stellantriebes (1) mit dem Karosserieteil (6) letztlich nur über die elastischen Mittel (9) erfolgt, wird die Übertragung von Körperschall, den der Elektromotor (17) des elektromotorischen Stellantriebes (1) gemeinsam mit dem Getriebe und dem Stellglied (3) erzeugt, auf das Karosserieteil (6) deutlich vermindert, so daß der erfindungsgemäße elektromotorische Stellantrieb deutlich geräuscharmer läuft, als dies bei dem Vorbekannten der Fall ist.

### Bezugszeichenliste

- 1: elektromotorischer Stellantrieb
- 2: Gehäuse
- 3: Stellglied, längsverschiebliche Schubstange
- 4: Befestigungsschrauben
- 5: Öffnung von 6
- 6: Karosserieteil, Türinnenblech
- 7: Durchgangsöffnung von 2
- 8: Geräuschdämpfer, Metallhülse
- 9: elastische Mittel, Gummi-O-Ringe
- 10: Hohlkammer von 7
- 11: umlaufender Bund
- 12: Innengewinde
- 13: Außengewindeabschnitt
- 14: Aufweitung
- 15: Schraubenkopf mit Kreuzschlitz
- 16: Außenvielkant, Außensechskant
- 17: Elektromotor

## Patentansprüche

1. Elektromotorischer Stellantrieb für Kraftfahrzeuge, insbesondere für Zentralverriegelungen, mit einem Gehäuse (2), mit einem Stellglied (3) und mit mindestens einer Befestigungsschraube (4), die in eine Öffnung (5) eines Karosserieteiles (6) hineinragt und eine Durchgangsöffnung (7) des Gehäuses (2) durchdringt, dadurch gekennzeichnet, daß in der Durchgangsöffnung (7) ein Geräuschdämpfer (8) angeordnet ist, der durch elastische Mittel mit dem Gehäuse (2) verbunden ist.

2. Elektromotorischer Stellantrieb nach Anspruch 1, dadurch gekennzeichnet, daß die Durchgangsöffnung (7) eine Hohlkammer (10) aufweist, an deren Stirn- und Seitenwänden sich die elastischen Mittel (9) abstützen.

3. Elektromotorischer Stellantrieb nach Anspruch 1, dadurch gekennzeichnet, daß der Geräuschdämpfer (8) eine Hülse ist, die als elastische Mittel (9) an ihrem Außenumfang O-Ringe, insbesondere aus Gummi, aufweist.

4. Elektromotorischer Stellantrieb nach Anspruch 3, dadurch gekennzeichnet, daß die Hülse (8) mindestens einen umlaufenden Bund (11) aufweist, an dem sich die O-Ringe (9) abstützen.

5. Elektromotorischer Stellantrieb nach Anspruch 3, dadurch gekennzeichnet, daß die Hülse (8) in mindestens einem ihrer Endbereiche ein Innengewinde (12) aufweist, das mit einem entsprechenden Außengewindeabschnitt (13) der Befestigungsschraube (4) zusammenwirkt.

6. Elektromotorischer Stellantrieb nach Anspruch 3, dadurch gekennzeichnet, daß die Hülse (8) in mindestens einem ihrer Endbereiche eine Aufweitung (14) aufweist.

7. Elektromotorischer Stellantrieb nach Anspruch 3, dadurch gekennzeichnet, daß die Hülse (8) ein Tiefziehteil ist.

8. Elektromotorischer Stellantrieb nach Anspruch 3, dadurch gekennzeichnet, daß die Hülse (8) ein Drehteil ist.

9. Elektromotorischer Stellantrieb nach Anspruch 1, dadurch gekennzeichnet, daß die Befestigungsschraube (4) auf der dem Karosserieteil (6) zugewandten Seite einen Schraubenkopf (15) aufweist.

10. Elektromotorischer Stellantrieb nach Anspruch 1, dadurch gekennzeichnet, daß die Befestigungsschraube (4) auf der vom Karosserieteil (6) abgewandten Seite einen Außenvielkant (16) aufweist.
